# EUROPEAN PATENT APPLICATION

(11) **EP 1 392 025 A2**
(43) Date of publication of application: **25.02.2004**
(21) Application number: 03019000.3
(22) Date of filing: 21.08.2003
(51) Int. Cl.: H04L 12/56

(54) **Wireless communication method and wireless communication device**

(30) Priority: 23.08.2002 JP 2002243863
(71) Applicant: Kabushiki Kaisha Toyota Jidoshokki, Kariya-shi, Aichi-ken 448-8671 (JP)
(72) Inventor: Yamamoto, Yukihiro, Kariya-shi Aichi-ken, 448-8671 (JP); Inuzuka, Hiroyuki, Kariya-shi Aichi-ken, 448-8671 (JP); Nagaya, Hiroshi, Kariya-shi Aichi-ken, 448-8671 (JP); Miyata, Hachiro, Kariya-shi Aichi-ken, 448-8671 (JP)
(74) Representative: Leson, Thomas Johannes Alois, Dipl.-Ing.

(57) **Abstract**

A wireless packet stores a plurality of coded words. Each coded word includes user data and an error correction code. Coded word number information indicating the number of coded words stored in the wireless packet, and coding parameter information indicating the coding method used when a coded word is generated are set in the header of the packet.

## Description

### Background of the Invention

### Field of the Invention

The present invention relates to a wireless communication system and a wireless communication method for transmission and reception of data in packets, and a wireless communication device for use with the system or the method.

### Description of the Related Art

A wireless communication system for transmitting and receiving data in packets has conventionally been put to practical use. The wireless communication system is widely applied to access circuits such as private networks and public networks, for example, a wireless LAN system, etc.

In the wireless communication system, data error generally occurs. Therefore, the wireless communication system is normally provided with the functions of checking the correctness of data and correcting error data. The function of correcting error data is realized by, for example, an error correction code (ECC).

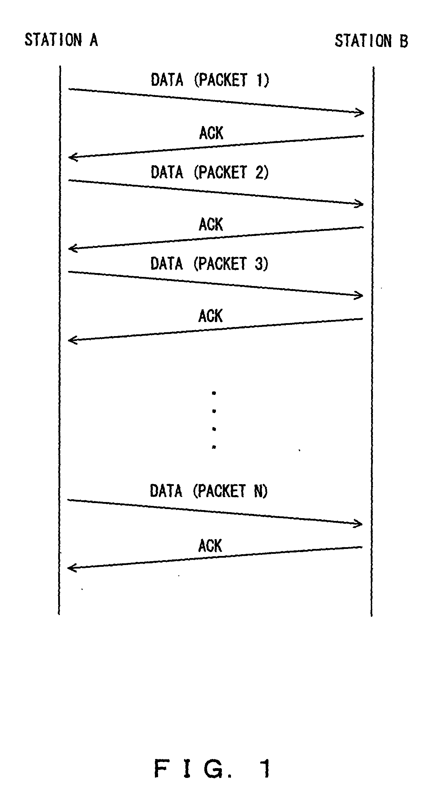

The wireless communication system often uses a protocol of checking for each packet the reception of a transmission packet by a receiving device. For example, in FIG. 1, a station A divides user data into a plurality of data units, generates a plurality of packets, and sequentially transmits the packets to a station B. On the other hand, the station B returns an ACK message each time it receives a packet. At this time, when the station A receives an ACK message corresponding to a transmission packet, it transmits the next packet. Therefore, when a large volume of data is transmitted, "data transmission" and "reception of an ACK message" are repeatedly transferred, thereby lowering the data transmission efficiency.

In the above-mentioned system, the data transmission efficiency can be improved if the data length of each packet is increased. However, if the data length of each packet is increased, the circuit size of the error correction and decoding circuit in the receiving device is expanded. Furthermore, if the data length of each packet is increased, it takes a longer time to decode a received signal and regenerate data. Therefore, in the communications performed in real time, the problem of data delay occurs. As a result, there are restrictions in extending the data length of each packet with the communications quality such as characteristics with delay, etc. taken into account.

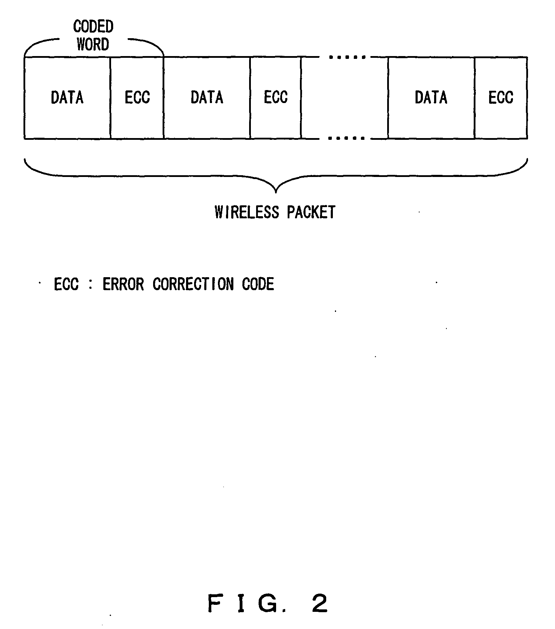

To solve the above-mentioned problems, for example, there is a system of storing and transmitting a plurality of coded words in each packet suggested as shown in FIG. 2. A coded word is a unit of data on which error can be independently corrected using a block code. Therefore, each coded word is assigned an error correction code (ECC).

Using a packet with the above-mentioned configuration, the number of times an ACK message shown in FIG. 1 is returned can be reduced with high data transmission efficiency even though each coded word is short. If a coded word is short, the circuit size of the error correction and decoding circuit in the receiving device can be reduced with less delay. The technology of using a packet with the above-mentioned configuration is indicated by, for example, Japanese Patent Application Laid-open No. 4-144335, and suggested by IEEE802.11 (especially IEEE802.11e).

As described above, there are various suggestions presented for the technology of improving the data transmission efficiency in the wireless communication system, but further improvements are still demanded including the improvement in communications quality.

### Summary of the Invention

The present invention aims at further improving the data transmission efficiency in the wireless communication system. Another object of the present invention is to improve the communications quality without complicating the decoding circuit of the receiving device.

In the wireless communication method according to the present invention, data is divided into a plurality of data units, a plurality of coded words are generated by assigning an error correction code to each data unit, a packet storing the plurality of coded words is generated, the coded word number information about the number of coded words stored in the packet is assigned, and a packet with the coded word number information is transmitted. The divided data is, for example, user data.

In the above-mentioned method, a receiving device can recognize the data length of a packet according to the coded word number information about the number of coded words stored in the packet. That is, the transmitting device can notify the receiving device of the data length using the number of bits smaller than the direct indication of the data length of the packet. As a result, the data transmission efficiency can be improved.

According to another aspect of the wireless communication method of the present invention, a coded word is generated from a data unit to be transmitted, a packet for storing the coded word is generated, coding parameter information about the information relating to the coding method used when the coded word is generated from the data unit is assigned to the packet, and a packet with the coding parameter information is transmitted.

In this method, the receiving device can determine according to the coding parameter information whether or not the coded word stored in the received packet can be decoded, thereby avoiding unnecessary decoding process.

A further aspect of the wireless communication method according to the present invention is a method of transmitting first data and second data. Plural pieces of first data are generated by copying the above-mentioned first data. Plural pieces of first data and second data are transmitted, the plural pieces of first data and second data are received, majority processing is performed on the plural pieces of regenerated data obtained by regenerating each of the plural pieces of first data, the regenerated data determined to be most probable in the majority processing is output as the first data, and the received second data is regenerated and output.

In this method, the receiving device can receive the first data with or without error, but there is a strong possibility that the first data without error can be correctly detected from among the received data. Furthermore, error can be corrected for the first data independent of the second data without providing a dedicated error correction and decoding circuit.

In the above-mentioned majority processing, only when the probability of obtaining the regenerated data determined to be the most probable exceeds a predetermined threshold probability, the regenerated data can be output as the first data. In this procedure, the reliability of the regenerated first data can be enhanced.

In a further aspect of the wireless communication method of the present invention, data is divided into a plurality of data units, the communications control information about the data is assigned to each of the plurality of data units, a plurality of coded words are generated by assigning an error correction code to each of the plurality of data units with the communications control information, and a packet for storing the plurality of coded words is generated and transmitted.

According to this method, although an arbitrary coded word cannot be regenerated among the plurality of coded words, other coded words can be regenerated using the communications control information set for each coded word. Therefore, although error occurs in an arbitrary coded word (especially the leading coded word), it is not necessary to request all coded words to be retransmitted.

A further aspect of the wireless communication method according to the present invention is a method of performing wireless communications using a packet storing one or more coded words between an access point and a plurality of stations, and a coded word stored in the packet transmitted from the access point to the station is made shorter than the coded word stored in the packet transmitted from the station to the access point.

In this method, the circuit size of the decoder provided in the station can be reduced, thereby reducing the entire cost of the wireless communication system.

### Brief Description of the Drawings

FIG. 1 shows an example of a data transmission sequence in the wireless communication system;
FIG. 2 shows the configuration of a packet containing a plurality of coded words;
FIG. 3 shows the configuration of the wireless communication system according to an embodiment of the present invention;
FIG. 4 shows the configuration of the wireless communication device according to an embodiment of the present invention;
FIG. 5 shows the configuration of a wireless packet used in the wireless communication system according to an embodiment of the present invention;
FIG. 6A shows the coding parameter set for each communications path;
FIGS. 6B and 6C are schematic diagrams of transmitting a wireless packet;
FIG. 7 shows the configuration of the decoder having the function of determining whether or not a decoding process is to be performed according to coding parameter information;
FIG. 8 shows the concept of the error correcting function on a packet header;
FIG. 9 shows the configuration of a majority unit shown in FIG. 8;
FIG. 10 is a flowchart of the operation of the majority unit;
FIG. 11A shows a general packet generation procedure;
FIG. 11B shows a packet generation procedure according to an embodiment of the present invention;
FIG. 12 is a flowchart of the packet generation procedure according to an embodiment of the present invention; and
FIG. 13 is a schematic diagram of the system using different coded word lengths depending on the transmission direction.

### Description of the Preferred Embodiments

The embodiments of the present invention are described below by referring to the attached drawings.

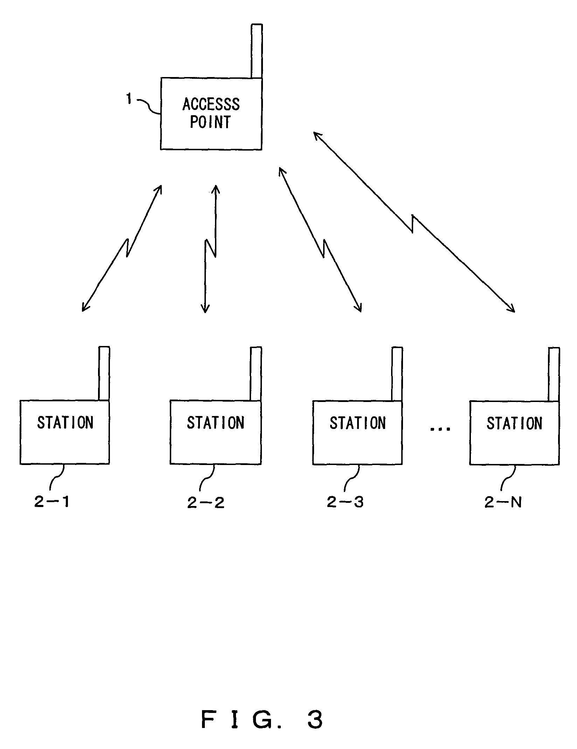

FIG. 3 shows the configuration of the wireless communication system according to an embodiment of the present invention. In FIG. 3, the system comprises an access point 1 and a plurality of stations 2-1 through 2-N. The access point 1 has the function of transmitting and receiving a wireless signal to and from each of the stations 2-1 through 2-N. On the other hand, the stations 2-1 through 2-N have the function of transmitting and receiving a wireless signal to and from the access point 1. The system is not limited to, but can be a wireless LAN system.

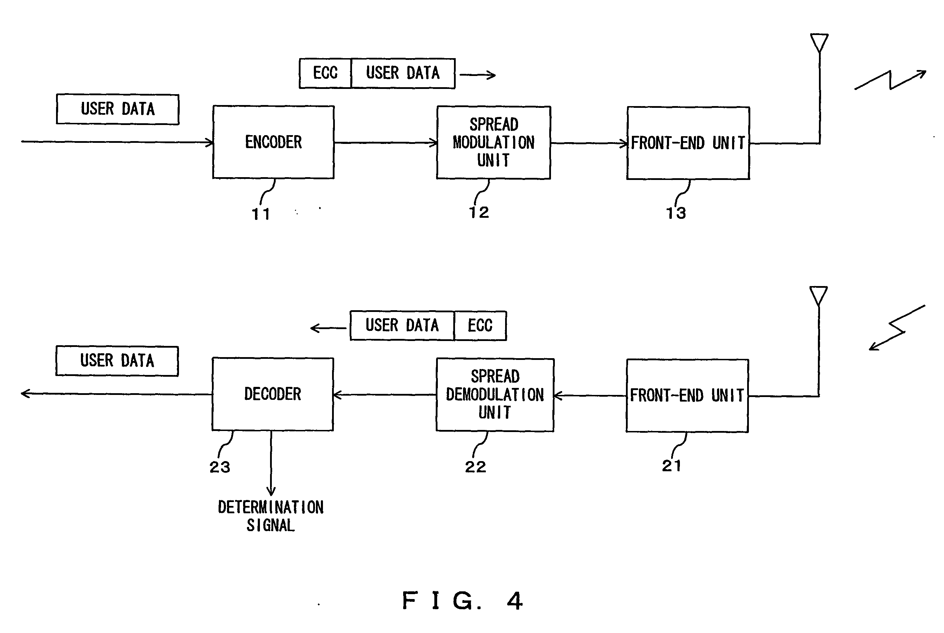

FIG. 4 shows the configuration of the wireless communication device according to an embodiment of the present invention. In FIG. 4, the wireless communication device corresponds to the access point 1 or the stations 2-1 through 2-N shown in FIG. 3. In FIG. 4, only the functions of transmitting generated user data and regenerating user data from a received signal are described.

An encoder 11 encodes user data. The coding method is not exclusively specified, but is a block code in this example. That is, when the encoder 11 receives user data, it divides the user data into data units (or data blocks) of a predetermined length, and assigns an error correction code (ECC) to each data unit. Thus, one or more coded words are generated. A spread modulation unit 12 spreads coded word data output from the encoder 11. Then, an RF front-end unit 13 transmits by wireless a signal output from the spread modulation unit 12.

An RF front-end unit 21 receives a wireless signal. A spread demodulation unit 22 generates a coded word by de-spreading a received signal. A decoder 23 retrieves user data from the coded word regenerated by the spread demodulation unit 22 and outputs it. At this time, if there is error in the user data, the error is corrected using an error correction code. The decoder 23 generates a determination signal indicating whether or not there is error in the user data, or whether or not the error in the user data can be corrected.

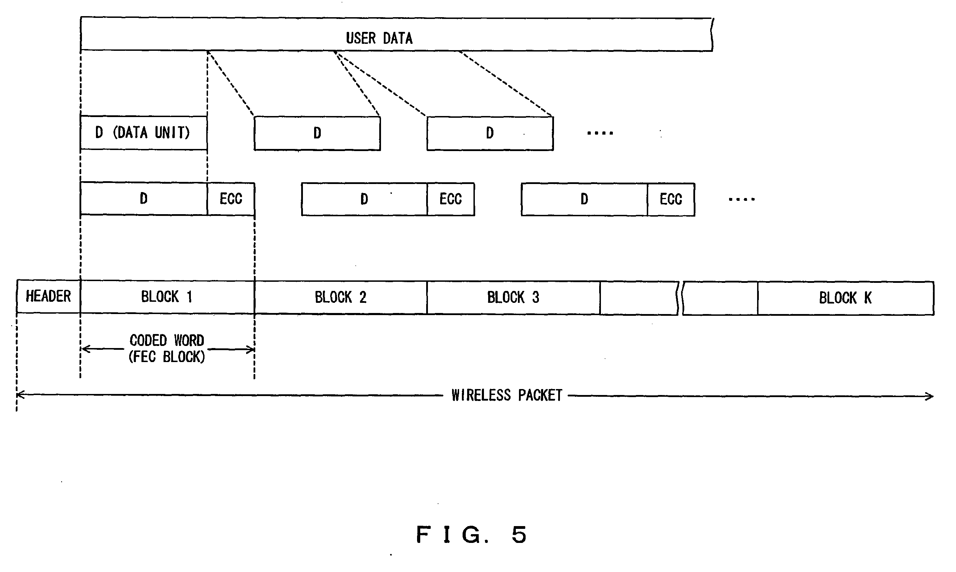

FIG. 5 shows the configuration of a wireless packet used in the wireless communication system according to an embodiment of the present invention. The transmitting device stores user data in one or more wireless packets and transmits them. The receiving device retrieves user data from the received wireless packet.

User data is divided into a predetermined data length. Thus, a plurality of data units are generated. If the data length of user data is shorter than the above-mentioned predetermined data length, then one data unit is generated.

Each data unit is individually encoded. That is, each data unit is assigned an error correction code (ECC) as a check bit. The error correction code is a code for checking of a bit error in a data unit, and a code for correction of error if there is error in the data unit. The error correction code can be generated by a well known technology. Thus, one or more coded words are generated. A coded word can also be referred to as an FEC (forward error correction) block. An error correction code of a block code is not limited to, but can be, for example, a Reed-Solomon code, a Hamming code, a BCH code, a Golay code, a Fire code, etc.

A wireless packet stores one or more coded words. In the example shown in FIG. 5, K coded words are stored. The maximum value of K is not limited to, but can be, for example, 20 or so.

The head of a wireless packet is assigned a packet header. At least one or both of the following information is set in the packet header.
(1) Coded word number information
(2) Coding parameter information

The "first data" described in the scope of the claims for the patent according to the present invention is, for example, the above-mentioned coded word number information or coding parameter information. However, the "first data" is not limited to the information, but can correspond to the entire packet header. On the other hand, the "second data" is, for example, one or more coded words shown in FIG. 5.

Coded word number information refers to the information indicating the number of coded words stored in a wireless packet. In the example shown in FIG. 5, "number of coded words = K" is obtained. Assuming that the length of each coded word is predetermined, the data length of a wireless packet can be recognized according to the coded word number information. For example, if the length of each coded word is 228 bytes, and 20 coded words are stored in the wireless packet, then "4560 (=228 x 20) bytes" can be obtained as the data length of the wireless packet.

Normally, in the wireless communication system, the receiving device requires the information about the data length of a wireless packet when it regenerates received data. For example, in the format regulated in IEEE 802. 11, the data length is indicated by the "frame length" in the PLCP header. However, a number of bits (that is, a large area) are required to indicate the data length. Practically, for example, in the PLCP header described in IEEE 802. 11, a 2-byte area is used to indicate a "frame length".

In the wireless communication system according to an embodiment of the present invention, the data length of a wireless packet is represented by coded word number information. The number of coded words stored in each wireless packet is about 20, and can be represented by several bits. That is, in this embodiment, an area of one byte is enough to represent the data length of a wireless packet.

Thus, in the system according to an embodiment of the present invention, an area required to represent the data length of a wireless packet can be smaller. Therefore, the data transmission efficiency can be improved as compared with the conventional wireless communication system (for example, IEEE 802. 11, etc.). Since the coded word number information is set in a packet header which is an area in which no block code is assigned, the receiving device can retrieve it without decoding the block code. Therefore, there occurs no delay when the receiving device computes the data length of a wireless packet.

The coding parameter information indicates a coding method used when a coded word is generated. Practically, the coding parameter information includes a coding rate (for example, data of 208 bytes with an error correction code of 20 bytes, etc.) when, for example, a Reed-Solomon code is used. However, the information set as coding parameter information is not limited to this application. For example, information about the type of available block code (Reed-Solomon codes, Hamming codes, BCH codes, etc.), information about the presence/absence of interleaving, information about switching block codes/convolutional codes, etc. can be set.

The coding parameter information is used when a receiving device which has received a wireless packet decodes the data stored in the packet, and it can be used when it is determined whether or not the packet is to be decoded. Described below is the function of determining whether or not a decoding process is should be performed using the coding parameter information.

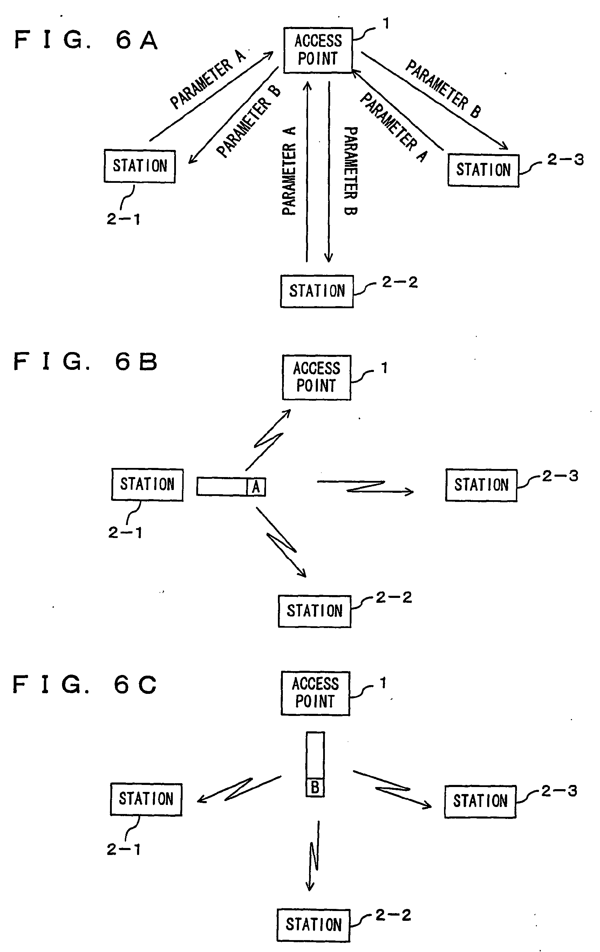

FIG. 6A shows the coding parameter set for each communications path. In this example, the data transmitted from each of the stations 2-1 through 2-3 to the access point 1 is encoded in the coding method specified by the coding parameter A, and the data transmitted from the access point 1 to each of the stations 2-1 through 2-3 is encoded in the coding method specified by the coding parameter B. The access point 1 is assumed to have a decoder for decoding the data encoded in the coding method specified by the coding parameter A. Each of the stations 2-1 through 2-3 is assumed to have a decoder for decoding the data encoded in the coding method specified by the coding parameter B.

In the above-mentioned wireless communication system, it is assumed that the station 2-1 transmits data to the access point 1. In this case, as shown in FIG. 6B, the coding parameter information indicating the coding parameter A is set in the wireless packet transmitted from the station 2-1. When the access point 1 receives the packet, it refers to the coding parameter information. At this time, the coding parameter information is "A". Therefore, the access point 1 determines that the coded word stored in the received packet can be decoded, and starts the decoding process. Thus, the access point 1 obtains the data transmitted from the station 2-1.

The wireless packet transmitted from the station 2-1 can also be received by the stations 2-2 and 2-3. However, the stations 2-2 and 2-3 are not provided with a decoder for decoding the data encoded in the coding method specified by the coding parameter A. Therefore, each of the stations 2-2 and 2-3 determines that the coded word stored in the packet cannot be decoded when the coding parameter information of a received wireless packet is "A". That is, although the stations 2-2 and 2-3 receive a packet transmitted from the station 2-1, they do not activate the decoding process. Therefore, the decoding process is not performed on the data which cannot be actually decoded, and the power consumption can be reduced.

On the other hand, when data is transmitted from the access point 1 to the station 2-1, as shown in FIG. 6C, the coding parameter information indicating the coding parameter B is set in the wireless packet. The destination address of the data is the "station 2-1". However, the destination address is assumed to be written as a part of user data to a coded word.

In this case, the wireless packet transmitted from the access point 1 is received by the stations 2-1 through 2-3. At this time, the coding parameter information set in the packet is "B". Therefore, each of the stations 2-1 through 2-3 determines that the coded word stored in the received packet can be decoded, and starts the decoding process. Then, only the station addressed to by the destination address obtained by decoding the coded word can fetch the received data. Thus, only the station 2-1 can regenerate the data transmitted from the access point 1.

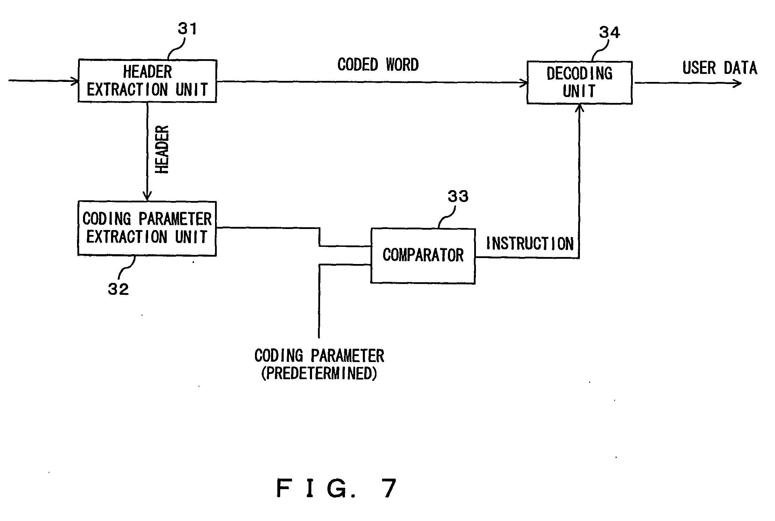

FIG. 7 shows the configuration of the decoder having the function of determining whether or not the decoding process is to be performed according to the coding parameter information. This decoder is provided for the access point 1 or stations 2-1 through 2-N.

A header extraction unit 31 extracts a header from a received packet, and transmits it to a coding parameter extraction unit 32. At this time, one or more coded words stored in the received packet are transmitted to a decoding unit 34. The coding parameter extraction unit 32 extracts coding parameter information from the header extracted by the header extraction unit 31.

A comparator 33 has the function of a control unit for controlling the decoding unit 34, compares the coding parameter information extracted by the coding parameter extraction unit 32 with the coding parameter information set in advance, and generates an instruction to be issued to the decoding unit 34 based on the comparison result. Practically, if the above-mentioned information of both coding parameters matches, then an instruction to perform the decoding process is issued to the decoding unit 34. If the above-mentioned information of both coding parameters does not match, then an instruction to stop the decoding process is issued to the decoding unit 34. The "coding parameter information set in advance" designates, for example, a coding method corresponding to the decoding process performed by the decoding unit 34 of the device. Therefore, when the device receives a packet storing the data which can be decoded by the decoding unit 34, the comparator 33 instructs the decoding unit 34 to perform the decoding process. When the device receives a packet storing the data which cannot be decoded by the decoding unit 34, the comparator 33 instructs the decoding unit 34 to stop the decoding process.

The decoding unit 34 determines whether or not the decoding process is to be performed according to an instruction from the comparator 33. In actuality, the decoding unit 34 is activated only when the above-mentioned information of both coding parameters matches each other, that is, only when a coded word which can be decoded is stored in the received packet.

Thus, since the coding parameter information is set in a packet header which is an area to which no block code is assigned in the system according to the embodiment of the present invention, the receiving device can detect whether or not data which can be decoded is stored in the received packet before performing the decoding process on a block code. Therefore, an unnecessary decoding process is not performed, thereby reducing the power consumption or avoiding the filtering process by software.

When a wireless packet shown in FIG. 5 is transmitted, bit error may occur in a packet header same as a coded word. Therefore, to correct the bit error occurring in a packet header, an error correction code is to be assigned to the packet header

However, if an error occurs in the packet header, the receiving device cannot decode subsequent coded words. That is, the information stored in the packet header has greater importance or a higher priority over other information. Therefore, it is desired that the error correction code to be assigned to a packet header has a stronger correction capability than error correction codes assigned to other information. However, if plural types of error correction codes are used in wireless packets, each receiving device has to be provided with a plurality of error correction and decoding circuits. That is, the circuit size of the decoder of the receiving device becomes larger. As a result, the wireless communication system according to the embodiment of the present invention realizes the function of regenerating correct data without an error correction code on a packet header. In the descriptions below, the function of regenerating correct data when an error occurs can be referred to as an error correcting function.

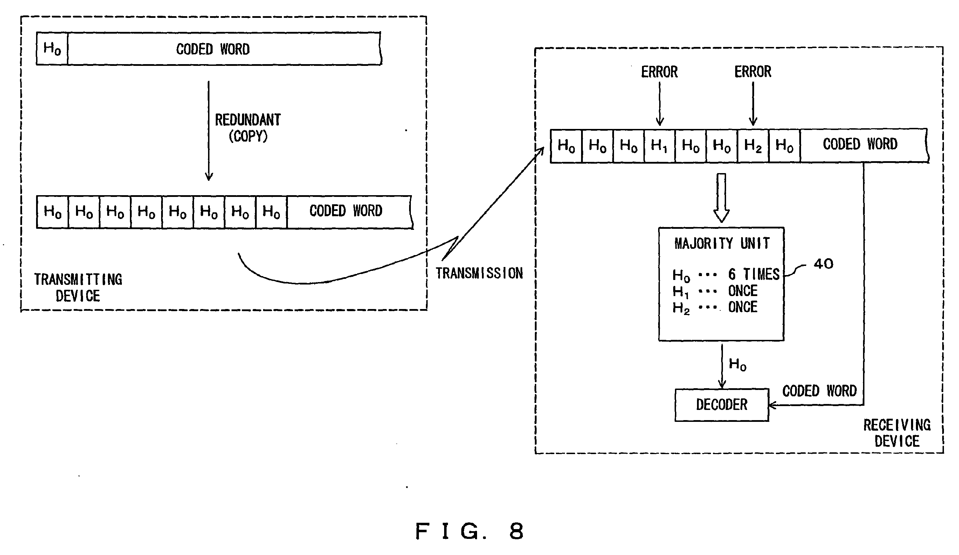

FIG. 8 shows the concept of the error correcting function on a packet header. In this example, it is assumed that the value of the information stored in the packet header is "Ho".

The transmitting device makes the header of a wireless packet redundant before transmitting the wireless packet. That is, the transmitting device generates a plurality of same packet headers by copying a packet header, and sets them in the leading areas of the wireless packet. Thus, the packet headers are repeatedly transmitted plural times. In the example shown in FIG. 8, the "header Ho" is copied such that the "header Ho" can be repeatedly transmitted eight times.

Thus, the wireless packet having redundant headers is received by the receiving device. At this time, error occurs at a certain probability depending on the communications environment, etc. in a bit string forming the wireless packet. Therefore, the bit error can occur also in a packet header. In the example shown in FIG. 8, the fourth header is garbled from "Ho" to "H1" as bit error, and the seventh header is garbled from "Ho" to "H2".

The receiving device receives radio signal conveying the packet and regenerates each piece of eight headers from the radio signal. Here, the receiving device is provided with a majority unit 40. The majority unit 40 checks the value specified by the eight received headers, and detects the header value which appears the most frequently. In the example shown in FIG. 8, "Ho", "H1", and "H2" respectively appear 6 times, once, and once. Therefore, in this case, it is determined that "H0" is the most likely (that is, the most probable) header value. Therefore, the coded word stored and transmitted in the received packet is decoded using the "header Ho".

Thus, in the wireless communication system according to the embodiment of the present invention, an error correcting function can be realized on a packet header without an error correction code. The correction capability of the error correcting function can be enhanced by, for example, increasing the number of times of repeatedly transmitting the packet headers. Therefore, the error correcting function of correcting error in a packet header having a correction capability higher than the error correcting function on a coded word can be realized without a block decoding circuit for correcting error in a packet header.

In the example shown in FIG. 8, majority processing is performed on the entire packet headers, but the majority processing can be performed only on a part of the packet headers. For example, the majority processing can be performed by making only the above-mentioned coded word number information redundant. Additionally, the majority processing can be performed by making only the above-mentioned coding parameter information redundant. Otherwise, the majority processing can be performed by making both coded word number information and coding parameter information redundant.

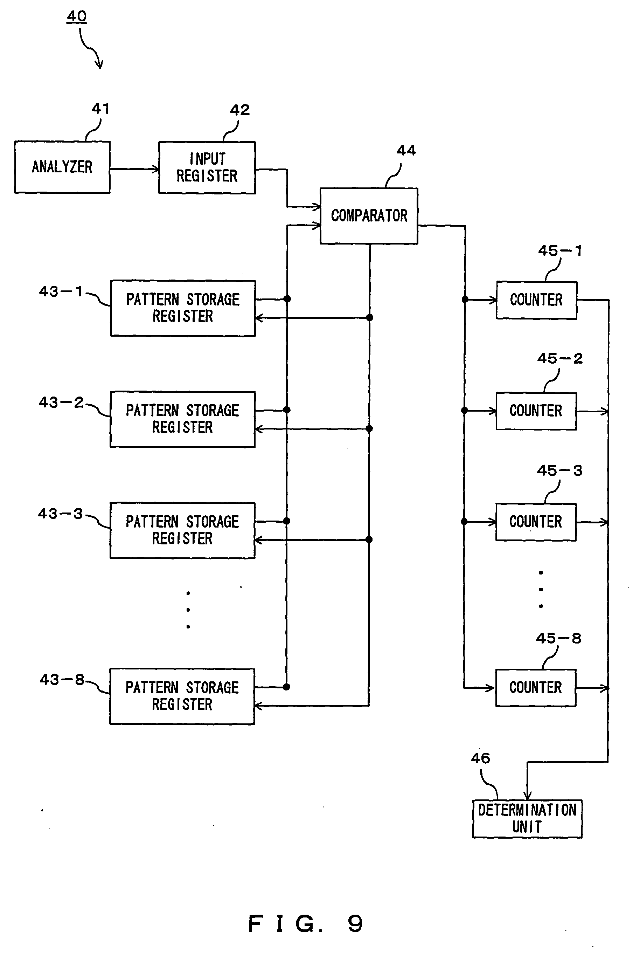

FIG. 9 shows the configuration of the majority unit 40 shown in FIG. 8. A plurality of packet headers in the leading area of the received packet are input to the majority unit 40.

An analyzer 41 analyzes a plurality of packet headers and sequentially outputs them one by one. An input register 42 temporarily stores the packet header outputted from the analyzer 41. Pattern storage registers 43-1 through 43-8 hold input packet headers for each header value. A comparator 44 compares the packet header held in the input register 42 with the packet headers held in the pattern storage registers 43-1 through 43-8, and increments the values of the corresponding counters 45-1 through 45-8. The counters 45-1 through 45-8 count the number of packet headers for each header value. A determination unit 46 determines the most probable packet header based on the count values of the counters 45-1 through 45-8.

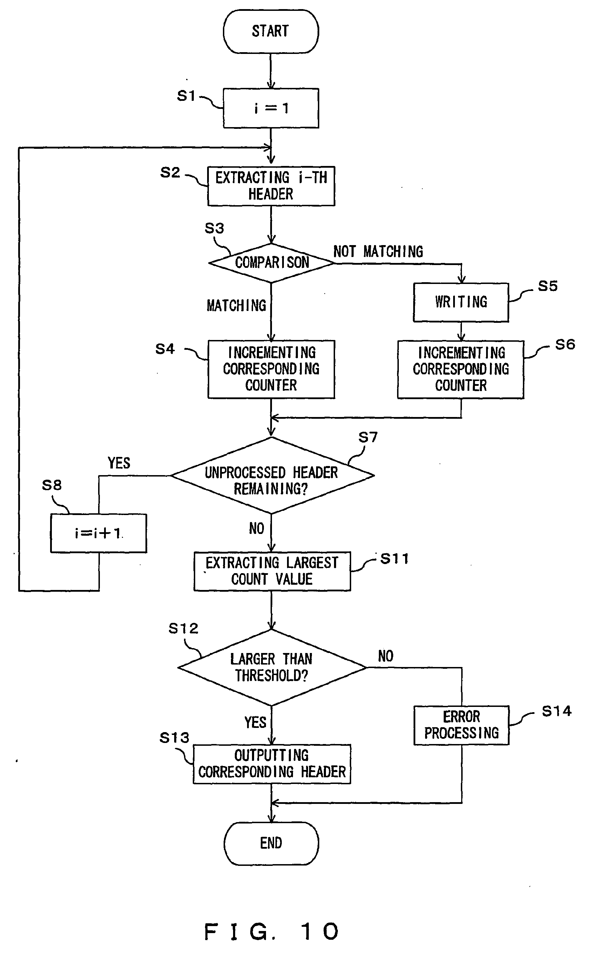

FIG. 10 is a flowchart of the operations of the majority unit 40. The processes in this flowchart are performed when the receiving device receives a wireless packet. When the processes in the flowchart start, it is assumed that the pattern storage registers 43-1 through 43-8 is vacant, and the counters 45-1 through 45-8 are reset.

In step S1, a variable "i" is initialized. The variable "i" identifies a plurality of headers set in a wireless packet. In step S2, a header (the i-th header) specified by the variable "i" is extracted, and written to the input register 42.

In step S3, the header held in the input register 42 is compared with the headers held in the pattern storage registers 43-1 through 43-8. If the pattern storage registers 43-1 through 43-8 hold the same headers as the input register 42, then the counters (45-1 through 45-8) corresponding to the register holding that header are incremented in step S4. For example, if the pattern storage register 43-1 holds the same header as the input register 42, then the counter 45-1 is incremented.

On the other hand, if none of the pattern storage registers 43-1 through 43-8 hold the same header as the input register 42, then the header held in the input register 42 is written to any one of the pattern storage registers 43-1 through 43-8 in step S5. Then, in step S6, the counters (45-1 through 45-8) corresponding to the pattern storage register to which the header is newly written are incremented. For example, when a new header is written to the pattern storage register 43-2, the counter 45-2 is incremented.

In steps S7 and S8, it is checked whether or not there is a remaining header on which the processes in steps S2 through S6 have not been performed. If there is an unprocessed header, the variable "i" is incremented, and control is returned to step S2. Thus, the processes in steps S2 through S6 are performed on the next header. If the processes in steps S2 through S6 are performed on all headers, the processes in and after step S11 are started.

In step S11, the largest count value is obtained from the counters 45-1 through 45-8. Then, in step S12, the count value obtained in step S11 is compared with a predetermined threshold. If the count value is larger than the threshold, then a corresponding header is output in step S13. For example, if the count value of the counter 45-1 is the largest, and the count value is larger than the threshold, then the header held in the pattern storage register 43-1 is output as the header transmitted from the receiving device. If the count value obtained in step S11 is equal to or smaller than the threshold, then it is determined that the reliability of the majority processing is low, and predetermined error processing is performed in step S14.

Thus, since the wireless communication system according to the embodiment of the present invention uses a threshold in the majority processing, the reliability of a packet header can be improved.

However, in the data transmitted in a wireless packet, not only the actual data, but also the communications control information can be included for control and management of the actual data. For example, in the example shown in FIG. 11A, not only a payload, but also a MAC (media access control) header including the information for control and management of the payload is encoded together and transmitted. In this case, the MAC header and the payload data are divided into a plurality of data units and transmitted. At this time, each data unit is assigned an error correction code. That is, the MAC header and the payload data are transmitted in a plurality of coded words 1 through 5.

In the example shown in FIG. 11A, the MAC header is stored in the coded word 1, and only the payload data is stored in the other coded words. The MAC header contains address information such as source information, destination information, etc., the information for assembly and disassemble of the payload data, etc. Therefore, if data error occurs in the coded word 1, and the error cannot be corrected by an error correction code, then not only the coded word 1, but also the coded words 2 through 5 cannot be obtained by the correct destination. Therefore, it is determined that a coded word storing a MAC header has greater importance or a higher priority than other coded words.

Therefore, it is desired that a coded word storing a MAC header is assigned an error correction code having a higher correction capability than other coded words. However, if plural types of error correction codes are used for the respective wireless packets, then each receiving device has to comprise a plurality of error correction and decoding circuits, thereby expanding the circuit size of the decoder.

Thus, in the wireless communication system according to the embodiment of the present invention, payload data is divided for each predetermined length when a plurality of data units are generated, and a MAC header is assigned to each data unit. Then, a plurality of coded words 1 through 6 are generated by assigning each error correction code to each data unit to which a MAC header is added. Thus, a wireless packet storing these plurality of coded words 1 through 6 is generated, and the wireless packet is transmitted.

As described above, in the wireless communication system according to the embodiment of the present invention, a MAC header is stored in each coded word. Therefore, for example, although data error occurs in the coded word 1, and the error cannot be corrected by an error correction code, the payload data stored in the coded words 2 through 6 is regenerated according to the information in the MAC header stored in each coded word. In this case, data retransmission is requested for the coded word 1 only. Therefore, considering the possibility that an error which cannot be corrected by an error correction code can occur, the entire data transmission efficiency can be improved as compared with the method shown in FIG. 11A.

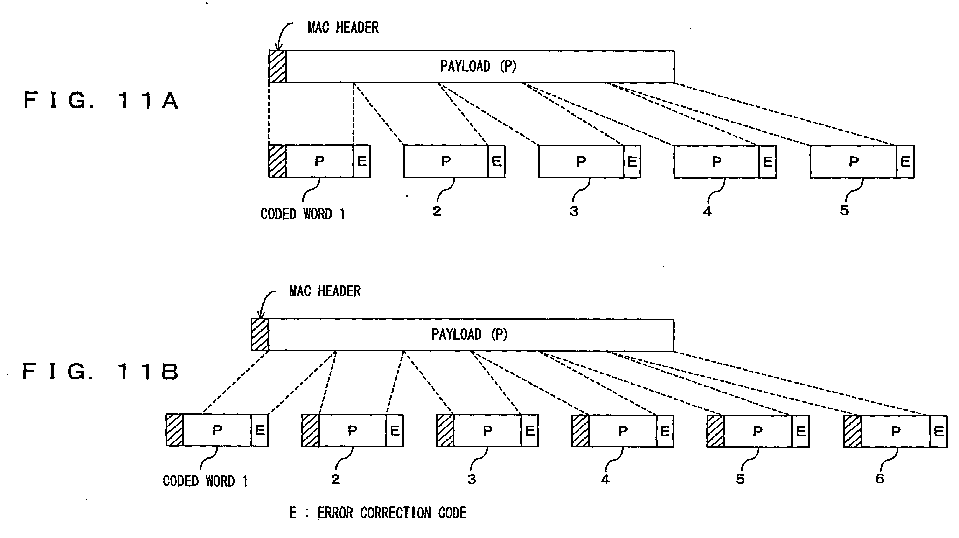

However, in the method shown in FIG. 11B, the MAC header is transmitted with redundancy. Therefore, when a large amount of information in the MAC header is transmitted, the data transmission efficiency is lowered. As a result, in FIG. 11B, all information stored in the MAC header is not provided for each data unit, but only a part of the information stored in the MAC header can be provided. In this case, the information provided for each data unit is, for example, source information, destination information, information for assembly and disassemble of payload data, etc. The information for assembly and disassemble of payload data can be, for example, a sequence number and/or a block number for uniquely identifying a plurality of data units obtained by analyzing the original payload data.

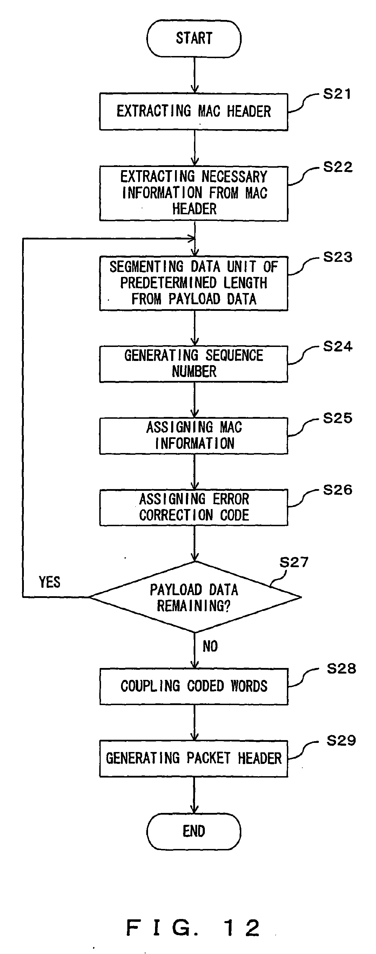

FIG. 12 is a flowchart of the packet generation procedure shown in FIG. 11B. In this example, the payload data to which a MAC header is assigned is stored in a wireless packet.

In step S21, a MAC header is extracted. In step S22, necessary information is extracted from the extracted MAC header. The information to be extracted is, for example, the source address, the destination address, etc. of payload data. The process in step S22 is not a mandatory process, but rather an arbitrary one.

In step S23, data (data unit) of a predetermined length is segmented from the head of the payload. In step S24, a sequence number to be assigned to the data unit segmented in step S23 is generated. In step S25, MAC information is added to the data unit segmented in step S23. The MAC information is, for example, the information extracted in step S22 and a sequence number generated in step S24. In step S26, the data unit with the MAC information is assigned an error correction code, and a coded word is generated.

In step S27, it is determined whether or not there is remaining payload data. If there is any payload data, control is returned to step S23, and the next data unit is segmented. On the other hand, unless there is remaining payload data, control is passed to step S28, and a plurality of coded words obtained by repeatedly performing the processes in steps S23 through S26 are coupled. Then, in step S29, the header in the wireless packet shown in FIG. 5 is generated.

Thus, in the wireless communication system according to the embodiment of the present invention, a plurality of coded words are stored in a wireless packet, and the important information is contained in each coded word. Therefore, although an arbitrary coded word in the plurality of coded words cannot be regenerated, the important information can be used each time another coded word is regenerated. Therefore, when an error which cannot be corrected by an error correction code occurs, there is a smaller amount of data to be retransmitted, thereby improving the entire data transmission efficiency.

When there is a small amount of information in the data transmitted from the access point 1 to each of the stations 2-1 through 2-N, and there is a large amount of information in the data transmitted from each of the stations 2-1 through 2-N in the wireless communication system shown in FIG. 3, the following configuration can be introduced. An application in which this kind of communication can be established can be, for example, each of the stations 2-1 through 2-N comprising a monitor camera to transmit image data from each of the stations 2-1 through 2-N to the access point 1 at a request from the access point 1.

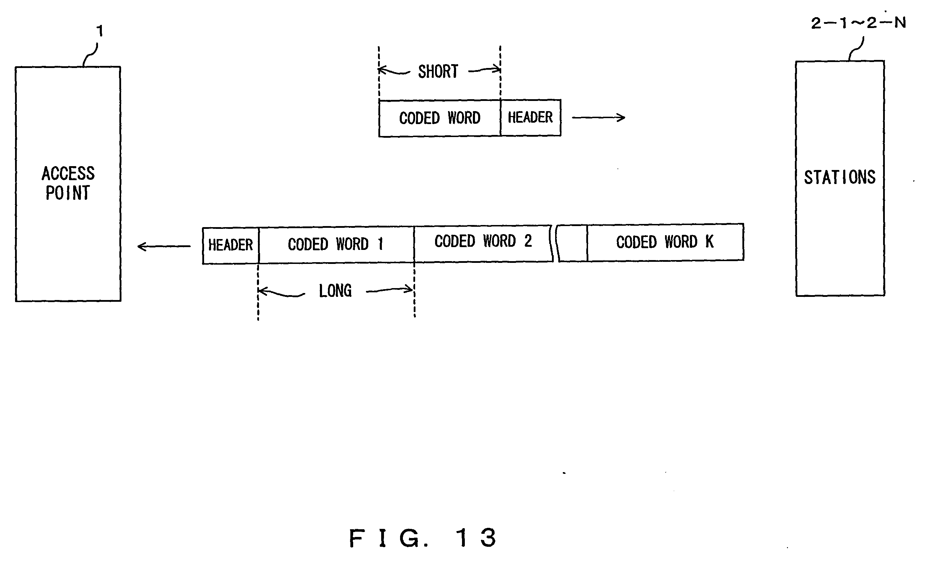

When there is a small amount of information in the data transmitted from the access point 1 to each of the stations 2-1 through 2-N, and there is a large amount of information in the data transmitted from each of the stations 2-1 through 2-N to the access point 1, the coded word stored in the packet transmitted from the access point 1 to each of the stations 2-1 through 2-N is made shorter than the coded word stored in the packet transmitted from each of the stations 2-1 through 2-N to the access point 1 as shown in FIG. 13. It is well known that, if a coded word is shorter, the circuit size of the decoder (error correction and decoder) for decoding the coded word can be smaller. That is to say, the decoder provided in each of the stations 2-1 through 2-N can be smaller. Furthermore, in the communications system in which a plurality of stations can be provided, it is important to have smaller, lower-cost, and lower power consumption stations. Therefore, the above-mentioned configuration can contribute to a lower-cost and lower power consumption for the entire wireless communication system.

In the above-mentioned embodiment of the present invention, the system comprises an access point and stations. However, the present invention is not limited to this configuration, but can be applied to a system configured by a base station device and terminal devices, a system configured by a plurality of identical terminal devices, etc.

According to the present invention, data transmission efficiency can be improved in a wireless communication system. Furthermore, the communications quality can be improved without a complicated decoding circuit of a receiving device.

A wireless packet stores a plurality of coded words. Each coded word includes user data and an error correction code. Coded word number information indicating the number of coded words stored in the wireless packet, and coding parameter information indicating the coding method used when a coded word is generated are set in the header of the packet.

## Claims

1. A wireless communication method, comprising:
dividing data into a plurality of data units;
generating a plurality of coded words by assigning an error correction code to each of the data units;
generating a packet storing the plurality of coded words;
assigning coded word number information about the number of coded words stored in the packet to the packet; and
transmitting the packet with the coded word number information.

2. A wireless communication method, comprising:
generating a coded word from a data unit to be transmitted;
generating a packet for storing the coded word;
assigning coding parameter information about information relating to a coding method used when' the coded word is generated from the data unit to the packet; and
transmitting the packet with the coding parameter information.

3. The method according to claim 2, further comprising:
receiving a packet to which the coding parameter information is assigned;
determining whether or not a coded word stored in the received packet can be decoded according to the coding parameter information; and
performing a process of decoding the coded word only when the coded word can be decoded.

4. A wireless communication method for transmitting first data and second data, comprising:
generating plural pieces of first data by copying the first data;
transmitting the plural pieces of first data and the second data;
receiving the plural pieces of first data and the second data;
performing majority processing on plural pieces of regenerated data obtained by regenerating each of the plural pieces of first data;
outputting the regenerated data determined to be most probable in the majority processing as the first data; and
regenerating and outputting the received second data.

5. A wireless communication method for transmitting first data and second data, comprising:
repeatedly transmitting the first data a plurality of times;
transmitting the second data;
performing majority processing on plural pieces of regenerated data obtained by regenerating the first data repeatedly received a plurality of times;
outputting the regenerated data determined to be most probable in the majority processing as the first data; and
regenerating and outputting the received second data.

6. The method according to claim 4 or 5, wherein
when coded word number information about a number of coded words is assigned to a packet storing a plurality of coded words and transmitted, the coded word number information corresponds to the first data, and the plurality of coded words correspond to the second data.

7. The method according to claim 4 or 5, wherein
when coding parameter information about a coding method used when a coded word is generated is assigned to a packet storing the coded word, the coding parameter information corresponds to the first data, and the coded word corresponds to the second data.

8. The method according to claim 4 or 5, wherein
in the majority processing, only when probability of obtaining regenerated data determined to be most probable exceeds a predetermined threshold probability, the regenerated data is output as first data.

9. A wireless communication method, comprising:
dividing data into a plurality of data units;
assigning communication control information about the data to each of the plurality of data units;
generating a plurality of coded words by assigning an error correction code to each of the plurality of data units with the communication control information; and
generating a packet for storing the plurality of coded words and transmitting the packet.

10. A wireless communication method for performing wireless communications using a packet storing one or more coded words between an access point (1) and a plurality of stations (2-1 through 2-N), wherein
a coded word stored in a packet transmitted from the access point (1) to the station (2-1 through 2-N) is made shorter than a coded word stored in a packet transmitted from the station (2-1 through 2-N) to the access point (1).

11. A wireless communication method for performing wireless communications using a packet storing one or more coded words between an access point (1) and a plurality of stations (2-1 through 2-N), wherein:
coded word number information about the number of coded words stored in the packet is assigned to the packet;
coding parameter information about information relating to the coding method used when the coded word is generated is assigned to the packet;
when first data and second data are transmitted using the packet,
plural pieces of first data are generated by copying the first data;
the plural pieces of first data and the second data are transmitted;
the plural pieces of first data and the second data are received;
majority processing is performed on plural pieces of regenerated data obtained by regenerating each of the plural pieces of first data;
the regenerated data determined to be most probable in the majority processing is output as the first data; and
the received second data are regenerated and output,
communications control information about data to be transmitted is set in each of the coded words; and
a coded word stored in a packet transmitted from the access point (1) to the station (2-1 through 2-N) is made shorter than a coded word stored in a packet transmitted from the station (2-1 through 2-N) to the access point (1).

12. A wireless communication device, comprising:
a decoding unit (34) decoding a coded word stored in a received packet, the packet including a coded word and coding parameter information about information relating to the coding method used when the coded word is generated, and;
a coding parameter extraction unit (32) extracting the coding parameter information from the packet; and
a control unit (33) activating said decoding unit (34) when the coding parameter information extracted by said coding parameter extraction unit (32) indicates a coding method in which said decoding unit (34) can decode data, and stopping said decoding unit (34) when the coding parameter information indicates a coding method in which said decoding unit (34) cannot decode data.

13. A wireless communication device, which receives first data a plurality of times and receives second data, comprising:
a majority unit (40) performing majority processing on plural pieces of regenerated data obtained by regenerating each piece of the received first data; and
a decoder regenerating the second data using regenerated data determined to be most probable in said majority processing.
